# EUROPEAN PATENT APPLICATION

(11) **EP 4 621 973 A2**
(43) Date of publication of application: **24.09.2025**
(21) Application number: 25158818.2
(22) Date of filing: 19.02.2025
(51) Int. Cl.: H01M 50/503, H01M 50/583

(54) **BUSBAR AND BATTERY MODULE**

(30) Priority: 01.03.2024 CN 202420407843 U; 03.06.2024 WO PCT/CN2024/097050
(71) Applicant: Eve Energy Co., Ltd., Huizhou, Guangdong 516006 (CN)
(72) Inventor: HUANG, Guozhao, Huizhou, Guangdong, 516006 (CN); ZHOU, Jieyu, Huizhou, Guangdong, 516006 (CN); LI, Xiaokang, Huizhou, Guangdong, 516006 (CN)
(74) Representative: Berggren Oy

(57) **Abstract**

The application provides a busbar and a battery module, which relate to the technical field of battery. The busbar includes a bar part and a plurality of conductors arranged at intervals. Each of the plurality of conductors includes a fuse part and a conducting part. The fuse part has a melting point lower than a melting point of the bus bar and lower than a melting point of the conducting part. Two ends of the fuse part are respectively connected to the conducting part and the bar part. The conducting part is configured to be connected to a positive electrode or a negative electrode of a battery cell.

## Description

### TECHNICAL FIELD

The present application relates to the technical field of battery, and in particular to a bus and a battery module.

### BACKGROUND

In the related technologies, as the application of power batteries becomes more and more extensive, their safety issues have received more and more attention. Battery short circuit is an important factor causing safety issues. At present, the design requirements of battery short circuit protection are mainly met by designing a fuse structure on the busbar, so that when the battery is short-circuited or the temperature is abnormal, the fuse structure is melted, thereby disconnecting the battery circuit.

Usually, there are multiple busbars configured to connect multiple battery cells in series in sequence, that is, one side of the busbar is a positive electrode conducting part electrically connected to the positive electrode of one battery cell, and the other side is a negative electrode conducting part electrically connected to the negative electrode of another battery cell, so as to connect adjacent battery cells in series.

Although the fuse structure is arranged between the positive electrode conducting part and the negative electrode conducting part to meet the fusing requirement of the busbar, it will reduce the current carrying capacity of the busbar, thereby causing an increase in the internal resistance of the battery module.

### SUMMARY

In a first aspect, an embodiment of the present application provides a busbar, including:
a bar part;
a plurality of conductors arranged at intervals, each of the plurality of conductors including a fuse part and a conducting part, wherein the fuse part has a melting point lower than a melting point of the bar part and lower than a melting point of the conducting part, two ends of the fuse part are respectively connected to the conducting part and the bar part, and the conducting part is configured to be connected to a positive electrode or a negative electrode of a battery cell.

In an embodiment, the fuse part extends from the bar part toward the conducting part, and an extending direction of the fuse part forms an acute angle or an obtuse angle with an extending direction of the bar part.

In an embodiment, a cross section of the fuse part perpendicular to a current flowing direction through the fuse part is smaller than a cross section of the conducting part perpendicular to a current flowing direction through the conducting part and is smaller than a cross section of the bar part perpendicular to the current flowing direction through the bar part.

In an embodiment, a fuse hole is defined on the fuse part.

In an embodiment, a fuse slot is defined on the fuse part.

In an embodiment, the fuse hole has an elongated shape, and an extension direction of a wall of the fuse hole is consistent with an extension direction of the fuse part.

In an embodiment, the fuse slot has an elongated shape, and an extension direction of a wall of the fuse slot is consistent with an extension direction of the fuse part.

In an embodiment, the fuse part has an arc-shaped structure with two ends thereof respectively connected to the conducting part and the bar part.

In an embodiment, the cross section of the bar part perpendicular to the current flowing direction through the bar part is larger than a cross section of each of the plurality of conductors perpendicular to a current flowing direction through the conductor.

In an embodiment, a thickness of the bar part is greater than a thickness of each of the plurality of conductors.

In an embodiment, the bar part includes a first elongated member and a second elongated member stacked in sequence along a thickness direction of the bar part, and wherein the second elongated member is integrally formed with the plurality of conductors, and a thickness of the second elongated member is consistent with the thickness of each of the plurality of conductors.

In an embodiment, a resistivity of the first elongated member is lower than a resistivity of the second elongated member.

In an embodiment, the busbar is applied to a battery module, the battery module includes the battery cells having poles, and wherein a first through hole configured to be aligned with a corresponding one of the poles is defined on the connecting part.

In a second aspect, an embodiment of the present application provides a battery module, including the above busbar.

According to the present application, each fuse part is arranged between the bar part and the corresponding conducting part, so that the current gathered by the busbar does not pass through the fuse parts. Therefore, the fuse parts can meet the fusing requirement of the busbar without affecting the amount of the current that the busbar can carry, thereby improving the current carrying capacity of the busbar and reducing the internal resistance of the battery module.

### BRIEF DESCRIPTION OF THE DRAWINGS

FIG. 1 is a schematic diagram of the structure of a busbar according to an embodiment of the present application;
FIG. 2 is a schematic diagram of a partial structure of a busbar according to an embodiment of the present application;
FIG. 3 is an enlarged view of Portion A in FIG. 1;
FIG. 4 is an exploded view of a busbar according to an embodiment of the present application.

### List of reference numerals:

001, busbar;
011, conductor; 111, conducting part; 1111, first through hole; 112, fuse part; 1121, fuse hole;
012, bar part; 121, first elongated member; 122, second elongated member; 123, positioning hole; 124, second through hole.

### DETAILED DESCRIPTION OF THE EMBODIMENTS

The terms "first" and "second" are used for descriptive purposes only and should not be understood as indicating or implying relative importance or implicitly indicating the number of the indicated technical features. Thus, a feature defined as "first" or "second" may explicitly or implicitly include one or more of the features. In the description of this application, the meaning of "plurality" is two or more, unless otherwise clearly and specifically defined.

In the description of this application, it should be noted that, unless otherwise clearly specified and limited, the terms "installed", "connected" and "coupled" should be understood in a broad sense, for example, it can be a fixed connection, a detachable connection, or an integral connection; it can be a mechanical connection, an electrical connection, or mutual communication; it can be a direct connection, or an indirect connection through an intermediate medium, it can be the internal connection of two elements or the interaction relationship between two elements. For ordinary technicians in this field, the specific meanings of the above terms in this application can be understood according to specific circumstances.

In the description of the embodiments of the present application, words such as "example" or "for example" are used to indicate examples, illustrations or descriptions. Any embodiment or design described as "example" or "for example" in the embodiments of the present application is not to be interpreted as being more preferred or having more advantages than another embodiment or design. The use of words such as "example" or "for example" is intended to present relative concepts in a clear manner.

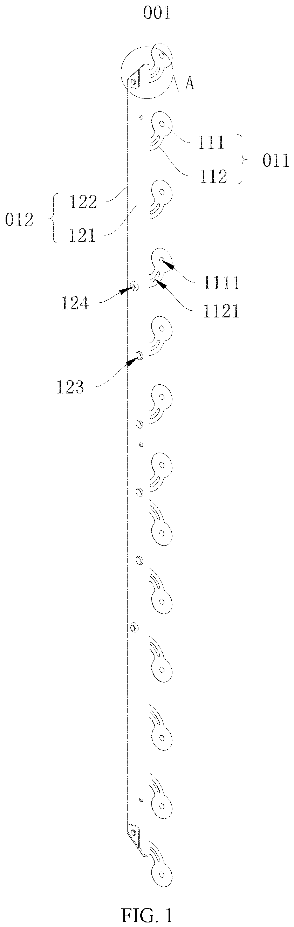

Please refer to FIG. 1, which is a schematic diagram of the structure of a busbar 001 according to an embodiment of the present application. An embodiment of the present application provides a busbar 001. The busbar 001 includes a bar part 012 and a plurality of conductors 011 arranged at intervals. The conductors 011 each include a fuse part 112 and a conducting part 111. The melting point of each fuse part 112 is lower than the melting points of the bar part 012 and the corresponding conducting part 111. Each fuse part 112 has two ends respectively connected to the corresponding conducting part 111 and the bar part 012. The conducting parts 111 each are configured to be connected to the positive electrode or the negative electrode of a battery cell.

It can be understood that the plurality of conductors 011 are arranged at intervals along the length direction of the bar part 012. A plurality of conducting parts 111 are connected to the same bar part 012 and are connected to electrodes of the same polarity of a plurality of battery cells, thereby connecting the positive or negative electrodes of the plurality of battery cells in parallel. Accordingly, the battery module is provided with at least two busbars, one of which is configured to connect the positive electrodes of the plurality of battery cells in parallel, and the other is configured to connect the negative electrodes of the plurality of battery cells in parallel. The busbar 001 according to this embodiment may be used to connect the positive electrodes of the battery cells, and a conventional busbar may be used to connect the negative electrodes of the battery cells.

Exemplarily, the melting point of each fuse part 112 is less than 1000 °C, and the melting points of the bar part 012 and each conducting part 111 are greater than 1000 °C. When the current is abnormal and causes a rise in temperature to a certain degree, the fuse parts 112 melts themselves to cut off the current, thereby disconnecting the battery circuit.

There are many ways to fuse the fuse parts 112 so as to disconnect the bar part 012 from the conducting parts 111. For example, in a first way, the fuse parts 112 may be formed of a material having a melting point lower than the melting point of the material of the bar part 012 and also lower than the melting point of the material of the conducting parts 111, so that the fuse parts 112 can be fused earlier than other components. For another example, in a second way, the cross section of each fuse part 112 perpendicular to the current flowing direction through the fuse part 112 may be structured to be smaller than the cross section of the corresponding conducting part 111 perpendicular to the current flowing direction through the conducting part 111 and also smaller than the cross section of the bar part 012 perpendicular to the current flowing direction through the bar part 012, so that the fuse parts 112 can be fused earlier than other components.

In this embodiment, each fuse part 112 is arranged between the bar part 012 and the corresponding conducting part 111, so that the current gathered by the busbar 001 does not pass through the fuse parts 112. Therefore, the fuse parts 112 can meet the fusing requirement of the busbar 001 without affecting the amount of the current that the busbar 001 can carry, thereby improving the current carrying capacity of the busbar 001 and reducing the internal resistance of the battery module.

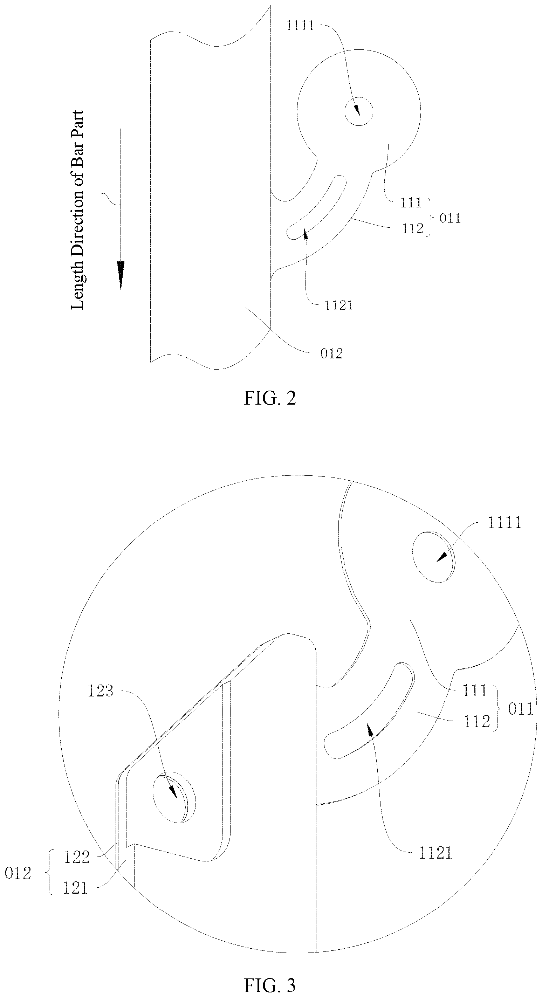

Please refer to FIG. 2, which is a schematic diagram of a partial structure of a busbar 001 according to an embodiment of the present application. In an embodiment, each fuse part 112 extends from the bar part 012 to the corresponding conducting part 111, and the extension direction of the fuse part 112 forms an acute angle or an obtuse angle with the extension direction of the bar part 012, so that the two ends of the fuse part 112 are staggered along the length direction of the bar part 012.

In this embodiment, the extension direction of each fuse part 112 forms an acute angle or an obtuse angle with the extension direction of the bar part 012, so that the two ends of the fuse part 112 are staggered along the length direction of the bar part 012. In this way, the size of each fuse part 112 in the length direction of the bar part 012 can be increased while the spacing between the conducting parts 111 and the bar part 012 is limited, thereby making the size of the fuse part 112 meet the fusing requirements, and finally improving the reliability of the busbar 001.

In an embodiment, the fuse parts 112 are configured to be fused earlier than other components in the above mentioned second way. Specifically, the cross section of each fuse part 112 perpendicular to the current flowing direction through the fuse part 112 is smaller than the cross section of the corresponding conducting part 111 perpendicular to the current flowing direction through the conducting part 111 and is also smaller than the cross section of the bar part 012 perpendicular to the current flowing direction through the bar part 012.

Exemplarily, each fuse part 112 is integrally formed with the corresponding conducting part 111.

In this embodiment, the fusing of the fuse parts 112 is achieved earlier than other components, which depends on the size relation between the cross sections of various components where the current flows. Therefore, the fuse parts 112 and the conducting parts 111 can be formed of the same material, so that each fuse part 112 can be integrally formed with the corresponding conducting part 111, thereby improving the efficiency in formation of the conductors 011 and reducing the manufacturing difficulty of the busbar 001.

In an embodiment, a fuse hole 1121 or a fuse slot is defined on each fuse part 112.

In this embodiment, by defining a fuse hole 1121 or a fuse slot on each fuse parts 112, the cross section of the fuse part 112 perpendicular to the current flowing direction through the fuse part 112 can be made smaller, and the fuse part 112 has a larger surface area, thereby improving the fusing reliability of the fuse part 112.

Specifically, in the case that a fuse hole 1121 is defined on a fuse part 112, as shown in FIG. 2, the fuse hole 1121 is an elongated kidney-shaped hole, and the extension direction of walls of the fuse hole 1121 is consistent with the extension direction of the fuse part 112. In the case that a fuse slot is defined on a fuse part 112, the fuse slot has an elongated shape, and the extension direction of walls of the fuse slot is consistent with the extension direction of the fuse part 112. In this way, the length of the structure of the fuse part 112 for fusing can be increased, so that fusing at any position of the walls of the fuse hole 1121 or at any position of the walls of the fuse slot can meet the fusing requirements, thereby improving the fusing reliability of the fuse part 112.

Please refer to FIG. 2. In an embodiment, a fuse part 112 has an arc-shaped structure, and two ends of the arc-shaped structure are respectively connected to the corresponding conducting part 111 and the bar part 012.

Based on the above arrangement according to this embodiment, the fuse part 112 can be longer in size when the distance between the two ends of the fuse part 112 is fixed, thereby further improving the reliability of the busbar 001.

Please refer to FIG. 1, in an embodiment, the cross section of the bar part 012 perpendicular to the current flowing direction through the bar part 012 is larger than the cross section of each conductor 011 perpendicular to the current flowing direction through the conductor 011.

It can be understood that the current passing through bar part 012 is greater than the current passing through each conductor 011. Therefore, in order to meet the overcurrent requirement of bar part 012, the cross section of bar part 012 perpendicular to the current flowing direction through the bar part 012 is structured to be larger than the cross section of each conductor 011 perpendicular to the current flowing direction through the conductor 011, so as to improve the reliability of busbar 001.

Exemplarily, thirteen conductors 011 are provided on a side of the bar part 012.

In combination with the above-mentioned embodiments, the bending directions of all the fuse parts 112 of the conductors 011 may be consistent, or the bending directions of some of the fuse parts 112 of the conductors 011 may be consistent and the bending directions of the others of the fuse parts 112 of the conductors 011 are opposite to the bending directions of the some of the fuse parts 112 of the conductors 011, as shown in FIG. 1. Specifically, the bending directions of the fuse parts 112 depends on the arrangements of different battery modules.

Please refer to FIG. 3, which is an enlarged view of Portion A in FIG. 1. In an embodiment, the thickness of the bar part 012 is greater than the thickness of each conductor 011.

Exemplarily, the thickness of the bar part 012 is 2-2.6 mm, and the thickness of each conductor 011 is 0.2-0.4 mm. It is understood that the thickness of the bar part 012 includes but is not limited to 2 mm, 2.1 mm, 2.2 mm, 2.4 mm, 2.5 mm, and 2.6 mm. The thickness of each conductor 011 includes but is not limited to 0.2 mm, 0.21 mm, 0.22 mm, 0.3 mm, 0.35 mm, and 0.4 mm.

**In** this embodiment, a larger cross section of the bar part 012 perpendicular to the current flowing direction through the bar part 012 is achieved by increasing the thickness of the bar part 012, which can reduce the surface area of the bar part 012 in the battery module, thereby reducing the difficulty of arranging the busbar 001 and improving the installation efficiency of the busbar 001.

In an embodiment, the bar part 012 is integrally formed with the conductors 011.

Based on the above arrangement according to this embodiment, the reliability of the connection between the bar part 012 and the conductors 011 can be improved, thereby improving the reliability of the busbar 001.

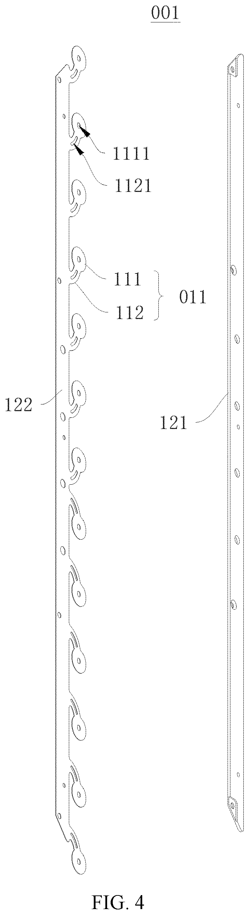

Please refer to FIG. 4, which is an exploded view of a busbar 001 according to an embodiment of the present application. In an embodiment, the bar part 012 includes a first elongated member 121 and a second elongated member 122 stacked in sequence along the thickness direction of the bar part 012, the second elongated member 122 is integrally formed with the conductors 011, and the thickness of the second elongated member 122 is consistent with the thickness of the conductors 011.

As can be understood, in the case that the bar part 012 is integrally formed with the conductors 011, the thickness difference between the bar part 012 and the conductors 011 increases the difficulty in formation. In view of this, in this embodiment, the bar part 012 is structured as a combination of first elongated member 121 and a second elongated member 122, and the thickness of the second elongated member 122 is consistent with the thickness of the conductors 011. The first elongated member 121 and the combination of the second elongated member 122 and the conductors 011 are formed respectively in such a way that the thickness of the first elongated member 121 is same as the overall thickness of the combination of the second elongated member 122 and the conductors 011. Therefore, the difficulty in forming the busbar 001 can be reduced.

Furthermore, the first elongated member 121 is welded with the second elongated member 122. Specifically, the first elongated member 121 and the second elongated member 122 are combined into one by laser welding.

In an embodiment, the melting point of the first elongated member 121 is greater than the melting point of the conductors 011.

Specifically, the material of the first elongated member 121 may be copper, and the material of the second elongated member 122 may be aluminum.

It can be understood that the second elongated member 122 is integrally formed with the conductors 011. Therefore, the second elongated member 122 and the conductors 011 are made of the same material. Accordingly, the melting point of the first elongated member 121 is also greater than the melting point of the conductors 011.

Based on the above arrangement according to this embodiment, the current carrying capacity of the bar part 012 can be improved, and the bar part 012 can be prevented from being fused, thereby improving the reliability of the busbar 001.

In an embodiment, the resistivity of the first elongated member 121 is lower than the resistivity of the second elongated member 122.

It can be understood that the resistance of the first elongated member 121 is lower than the resistance of the second elongated member 122.

Specifically, the material of the first elongated member 121 may be copper, and the material of the second elongated member 122 may be aluminum.

Based on the above arrangement according to this embodiment, the conducting capacity of the busbar 001 can be improved and the material cost of the busbar 001 can be controlled.

In an embodiment, the busbar 001 is applied to a battery module. The battery module includes battery cells. The battery cells each have poles. A first through hole 1111 is defined on each conducting part 111, and the first through hole 1111 is configured to be aligned with one of the poles.

It can be understood that a reference ring is provided on the end face of each pole, and the reference ring is arranged coaxially with the pole. When the first through hole 1111 of a conducting part 111 shows therefrom the reference ring of a corresponding pole completely, it can be determined that the conducting part 111 is aligned with the pole.

In this embodiment, by providing the first through holes 1111, it is convenient for a person to quickly determine whether the busbar 001 is installed in place, thereby improving the convenience of the installation of the busbar 001.

According to the embodiment of the present application, the busbar 001 can be installed in the following way. A positioning hole 123 and a second through hole 124 are defined on the bar part 012. The positioning hole 123 is configured to match with the positioning column on the insulating bracket of the battery module. The second through hole 124 is configured to match with the screw. The threaded end of the screw extends through the second through hole 124 and then is threadedly connected to the insulating bracket, thereby fixing the busbar 001 on the insulating bracket. Then, the conducting parts 111 are fixedly connected to the electrodes of the battery, such as the positive electrodes, by laser welding.

Correspondingly, an embodiment of the present application further provides a battery module, which includes the aforementioned busbar.

It can be understood that the battery module also includes battery cells, a cell bracket, etc. The battery cells are installed on the cell bracket. A collection bracket is fixedly connected to ends of the battery cells, and the busbar is arranged on the collection bracket and is electrically connected to the electrodes of the battery cells.

In this embodiment, the aforementioned busbar allows an increased size of each fuse part 112 in the length direction of the bar part 012 in the case that the distance between the conducting parts 111 and the bar part 012 is limited, so that the size of the fuse part 112 meets the fusing requirements, and finally the reliability of the battery module can be improved.

## Claims

1. A busbar (001), comprising:
a bar part (012);
a plurality of conductors (011) arranged at intervals, each of the plurality of conductors (011) comprising a fuse part (112) and a conducting part (111), wherein the fuse part (112) has a melting point lower than a melting point of the bar part (012) and lower than a melting point of the conducting part (111), two ends of the fuse part (112) are respectively connected to the conducting part (111) and the bar part (012), and the conducting part (111) is configured to be connected to a positive electrode or a negative electrode of a battery cell.

2. The busbar (001) according to claim 1, wherein the fuse part (112) extends from the bar part (012) toward the conducting part (111), and an extending direction of the fuse part (112) forms an acute angle or an obtuse angle with an extending direction of the bar part (012).

3. The busbar (001) according to claim 1, wherein a cross section of the fuse part (112) perpendicular to a current flowing direction through the fuse part (112) is smaller than a cross section of the conducting part (111) perpendicular to a current flowing direction through the conducting part (111) and is smaller than a cross section of the bar part (012) perpendicular to the current flowing direction through the bar part (012);

4. The busbar (001) according to claim 3, wherein a fuse hole (1121) is defined on the fuse part (112).

5. The busbar (001) according to claim 3, wherein a fuse slot is defined on the fuse part (112).

6. The busbar (001) according to claim 4, wherein the fuse hole (1121) has an elongated shape, and an extension direction of a wall of the fuse hole (1121) is consistent with an extension direction of the fuse part (112).

7. The busbar (001) according to claim 5, wherein the fuse slot has an elongated shape, and an extension direction of a wall of the fuse slot is consistent with an extension direction of the fuse part (112).

8. The busbar (001) according to any one of claims 1 to 7, wherein the fuse part (112) has an arc-shaped structure with two ends thereof respectively connected to the conducting part (111) and the bar part (012).

9. The busbar (001) according to claim 1 or 2, wherein a cross section of the bar part (012) perpendicular to a current flowing direction through the bar part (012) is larger than a cross section of each of the plurality of conductors (011) perpendicular to a current flowing direction through the conductor (011).

10. The busbar (001) according to any one of claims 3 to 7, wherein the cross section of the bar part (012) perpendicular to the current flowing direction through the bar part (012) is larger than a cross section of each of the plurality of conductors (011) perpendicular to a current flowing direction through the conductor (011).

11. The busbar (001) according to claim 9 or 10, wherein a thickness of the bar part (012) is greater than a thickness of each of the plurality of conductors (011).

12. The busbar (001) according to claim 11, wherein the bar part (012) comprises a first elongated member (121) and a second elongated member (122) stacked in sequence along a thickness direction of the bar part (012), and wherein the second elongated member (122) is integrally formed with the plurality of conductors (011), and a thickness of the second elongated member (122) is consistent with the thickness of each of the plurality of conductors (011).

13. The busbar (001) according to claim 12, wherein a resistivity of the first elongated member (121) is lower than a resistivity of the second elongated member (122).

14. The busbar (001) according to any one of claims 1 to 7, wherein the busbar (001) is applied to a battery module, the battery module comprises the battery cells having poles, and wherein a first through hole (1111) configured to be aligned with a corresponding one of the poles is defined on the connecting part (111).

15. A battery module, comprising the busbar (001) according to any one of claims 1 to 14.
